(19) **Europäisches Patentamt**
**European Patent Office**
**Office européen des brevets**

(11) **EP 4 078 030 B1**

(12) **EUROPEAN PATENT SPECIFICATION**

(45) Date of publication and mention
of the grant of the patent:
**26.11.2025 Bulletin 2025/48**

(21) Application number: **20918340.9**

(22) Date of filing: **10.09.2020**

(51) International Patent Classification (IPC):
**F23C 10/04** (2006.01) **F23C 13/08** (2006.01)
**F23C 99/00** (2006.01)

(52) Cooperative Patent Classification (CPC):
**F23C 10/04;** F23C 2900/99008; Y02E 20/34

(86) International application number:
**PCT/US2020/050107**

(87) International publication number:
**WO 2021/162751 (19.08.2021 Gazette 2021/33)**

(54) **CHEMICAL LOOPING SYSTEMS WITH AT LEAST TWO PARTICLE TYPES**

CHEMICAL-LOOPING SYSTEME MIT MINDESTENS ZWEI PARTIKELTYPEN

SYSTÈMES DE BOUCLES CHIMIQUES PRÉSENTANT AU MOINS DEUX TYPES DE PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2020 US 202062976908 P**

(43) Date of publication of application:
**26.10.2022 Bulletin 2022/43**

(73) Proprietor: **Ohio State Innovation Foundation**
**Columbus, OH 43201 (US)**

(72) Inventors:
• **FAN, Liang-Shih**
**Columbus, OH 43201 (US)**

• **KONG, Fanhe**
**Columbus, OH 43201 (US)**
• **SHAH, Vedant**
**Columbus, OH 43201 (US)**

(74) Representative: **Marks & Clerk LLP**
**15 Fetter Lane**
**London EC4A 1BW (GB)**

(56) References cited:
**EP-A1- 2 514 516      WO-A1-2012/144899**
**WO-A1-2020/210865      US-A1- 2012 319 051**
**US-A1- 2017 015 554      US-A1- 2019 152 778**
**US-A1- 2020 156 032**

## Description

### CROSS-REFERENCE TO RELATED APPLICATION(S)

The present application is related to and claims the priority benefit of U.S. Provisional Patent Application No. 62/976,908, filed February 14, 2020.

### TECHNICAL FIELD

The present disclosure relates to systems and methods for solid flow systems. More particularly, disclosed systems and methods may use two or more types of metal oxide or metal derivative-based particles.

### INTRODUCTION

Chemical looping is a versatile platform that can be used to convert various fuels into multiple products such as liquid fuels, hydrogen and electricity. Compared to the conventional energy conversion systems, chemical looping can achieve higher energy efficiency and lower $CO_2$ emissions via higher level of process intensification. The performance of a chemical looping system depends closely on the design of the oxygen carrier particles that perform redox functions while circulating in the system as the looping media. The particles used in the chemical looping system are made up of materials of active ingredients that perform the redox function while the remaining materials inside the same particle are inert serving as support to the active ingredients by assisting for their ionic transport phenomena and controlling the heat effects, thereby modulating the overall reactor temperature during the endothermic or exothermic redox reactions.

Common chemical looping systems use one type of particle that performs redox reactions and circulates in the circulatory loop. However, the operation of this nature can be challenging as using one type of particle may not be able to achieve fast reaction kinetics while simultaneously meeting other process operational requirements such as a small reactor volume, a high product yield, and desired reaction temperatures and their distribution under autothermal conditions.

US 2012/319051 A1 describes a cyclic process for producing synthesis gas comprising: a first step of oxidation of an oxidizable oxygen-carrying solid; a second purge step; a third combustion step with production of CO2; a fourth step of production of synthesis gas; a fifth purge step. EP 2514516 A1 describes a fixed bed filling composition, a method for preparing said fixed bed filling composition, and a method for reducing or preventing sintering of chemically reactive particles in a fixed bed. More particularly a method for fixed bed chemical looping combustion with reduced sintering is described. The fixed bed filling composition described therein comprises a mixture of chemically reactive particles with an inert particulate material, wherein a first part of said inert particulate material has an average particle size larger than the average particle size of said chemically reactive particles, and a second part of said inert particulate material has an average particle size smaller than the average particle size of said chemically reactive particles

### SUMMARY

In one aspect, a chemical looping system is disclosed. The chemical looping system includes a reducer reactor and a combustor reactor in fluid communication with the reducer reactor. The reducer reactor includes active solid particles and inert solid particles. The active solid particles include a metal oxide and are capable of cycling between a reduction reaction and an oxidation reaction. The inert solid particles include a refractory material and are not reactants in either the reduction reaction or the oxidation reaction. The combustor reactor is configured to receive active solid particles and inert solid particles from the reducer reactor.

In another aspect, a method of operating a chemical looping system is disclosed. The method includes providing active solid particles and inert solid particles to a reducer reactor, providing a carbonaceous feedstock to the reducer reactor, and providing reduced active solid particles, the inert solid particles, and oxidizing agent to a combustor reactor, the combustor reactor in fluid communication with the reducer reactor and configured to receive the reduced active solid particles and the inert particles from the reducer reactor. The active solid particles include a metal oxide and are capable of cycling between a reduction reaction and an oxidation reaction. The inert solid particles include a refractory material and are not reactants in either the reduction reaction or the oxidation reaction. The reduction reaction includes the carbonaceous feedstock and the active solid particles and generates a first product gas stream. Lattice oxygen is transferred from the active solid particles to the carbonaceous feedstock, thereby generating reduced active solid particles. The oxidation reaction includes the reduced active solid particles and the oxidizing agent to replenish the lattice oxygen and generate a second product gas stream.

This invention provides a chemical looping system according to independent claim 1 and a method of operating a chemical looping system according to independent claim 12. Embodiments are defined in the dependent claims.

**BRIEF DESCRIPTION OF THE DRAWINGS**

FIG. 1 is a chart showing a change in the turnover frequency (TOF) for particles with different iron (Fe) loadings.
FIG. 2 is a schematic diagram of an embodiment of an exemplary chemical looping system.
FIG. 3 is a schematic diagram of another embodiment of an exemplary chemical looping system.
FIG. 4 is a schematic diagram of another embodiment of an exemplary chemical looping system.
FIG. 5A is a chart showing experimental data for solid conversion versus time. FIG. 5B is a chart showing data from the same experiment as FIG. 5A for normalized weight versus time.
FIG. 6A is a chart showing experimental data for solid conversion versus iron (Fe) loading. FIG. 6B is a chart showing data from the same experiment as FIG. 6A for mechanical strength versus iron (Fe) loading.
FIG. 7A is a chart showing experimental data for effects of $Fe_2O_3$ weight percentage on a reducer reactor bottom temperature. FIG. 7B is a chart showing data from the same experiment as FIG. 7A, for effects of $Fe_2O_3$ weight percentage on the syngas yield.

**DETAILED DESCRIPTION**

System and methods disclosed and contemplated herein relate to chemical looping systems. Broadly, this disclosure reveals operating strategies for chemical looping systems that may be used for conversion of fossil fuels or biomass-based fuels to products such as syngas, hydrogen, or electricity. Exemplary strategies may involve the use of two or more types of metal oxide or metal derivative-based particles in the system to achieve an overall enhanced redox reaction kinetics compared to using solely one type of particles for the same application. An outcome of these strategies is the reduction in reactor size that can lead to attractive economics. Apart from chemical looping, this approach can also be utilized in any solid flow systems and applied to any type of reactor (such as moving bed, fluidized bed and fixed bed) systems where desirable reaction kinetics are required.

The instant disclosure reveals a viable operating strategy of using oxygen carrier particles for chemical looping redox application for the production of chemicals such as syngas, or electricity that can alleviate these challenges. The strategy involves the utilization of more than one types (2, 3, or more) of oxygen carrier particles in the reactor operation in order to achieve an overall enhanced redox reaction kinetics that is more favorable than if solely one type of particle is used in the reactor for the redox reaction. The net effect of using two or more than two types of particles in the system is primarily a better kinetics behavior compared to the system where only one type of particles is used, thereby leading to a reduced reactor size that is required to achieve the same reactant conversion. The instant disclosure provides experimental data and simulated results to support the validity of the multiparticle strategy for chemical looping system application. The strategy can be applied to any types of reactor configurations of reducer and combustor such as fluidized bed, moving bed and gas switching fixed bed, rotary kiln, and downer. Apart from chemical looping, this approach can also be utilized in any solid flow systems and applied to any type of reactor (such as moving bed, fluidized bed and fixed bed) systems where desirable reaction kinetics are required.

Chemical looping is a versatile technology platform with various applications. The uses of chemical looping technology include, but are not limited to, the conversion of carbon-based feedstocks to value-added products and carbon-capture assisted power generation systems. Non-limiting examples of value-added products that can be produced using chemical looping processes described in this disclosure include syngas, hydrogen, methanol, dimethyl ether (DME), and Fisher-Tropsch (FT) products. The conversion from feedstock to these end products usually needs to go through synthesis gas as an intermediate. Synthetic gas or syngas as commonly known, primarily comprises of $H_2$ and CO in varying proportions, along with small amount of $CO_2$ present. Syngas is currently manufactured through steam methane reforming (SMR), autothermal reforming (ATR), or gasification of coal. However, these technologies are highly capital and energy intensive, which is primarily due to the use of auxiliary process units such as air separation unit (ASU), water gas shift reactor (WGS) and acid gas removal (AGR) unit. Most of the current syngas production technologies use a highly endothermic reformer reactor, therefore requiring extra natural gas to be combusted outside the reactor to provide heat for the reactions inside. The cost associated with furnaces, natural gas and $CO_2$ capture further reduces the economic feasibility of syngas production. As a result, commercial production of syngas relies on economics of scale for being economically viable.

Chemical looping, on the other hand, utilizes lattice oxygen available within the metal oxide-based oxygen carrier to partially oxidize the carbonaceous fuels to produce syngas. Besides, chemical looping can also directly produce high purity $H_2$ via water-splitting [3]. The possible configurations of a chemical looping system include, but are not limited to, a two-reactor system containing a fuel reactor (reducer) and an air reactor (combustor), and a three-reactor system containing a reducer, a steam/$CO_2$ reactor (oxidizer), and a combustor. The details of these configurations will be described in the following sections. For a chemical looping system, different reactors may have different heat effects. i.e.

the reactions in some reactors may be endothermic, and the reactions in other reactors may be exothermic. Various chemical looping systems may be capable of operating under adiabatic conditions. The heat effect of reactions inside coupled with adiabatic operating conditions result in temperature change along the reactor. This temperature change in some occasions may render the reaction thermodynamically and/or kinetically unfavorable. Thus, it is sometimes needed to increase the heat capacity of the oxygen carrier particles. The increase in heat capacity is often achieved by increasing the percentage of support materials in the oxygen carrier particles. Although this strategy allows the chemical looping system to maintain a favorable temperature profile, increasing the percentage of support material beyond a certain extent within the oxygen carrier particles can reduce the reaction kinetics of the particles significantly, as evidenced by experimental results discussed in subsequent sections. The reduced reaction kinetics results in an increased reactor volume, hence increased capital cost of the system, making the process economically less attractive.

This disclosure reveals a method to improve the kinetics performance of the chemical looping system without altering the temperature profile provided by the sensible heat carried by the oxygen carrier particles. The method pertains to the use of multiple types (2, 3, or more) of particles in one chemical looping system instead of using only one type of particles. One or more type(s) of these particles in the system consist of certain concentrations of active ingredients and support materials. The ratio between active ingredients and support material within these particles is tailored for these particles to achieve desirable reaction kinetics. These particles are named as active solid particles or oxygen carrier particles.

The rest of the particles in the system consist entirely of inert materials, serving to maintain the temperature profile of the chemical looping system. These particles are named as inert solid particles. Thus, the system comprises both active solid particles and inert solid particles. Active solid particles used in the proposed scheme can have a higher active metal oxide concentration than the particles that are used in systems with only one type of particles. The higher active ingredient concentration allows for faster reaction kinetics, thereby reducing the reactor volume and capital cost. The inert solid particles on the other hand are solely responsible for maintaining the temperature profile across different reactors involved in the chemical looping scheme to achieve a temperature profile favorable to the process objectives.

## I. Example Particles

Exemplary systems disclosed and contemplated herein use active solid particles and inert solid particles.

### A. Active solid particles

Active solid particles, also known as oxygen carrier (OC) particles, are defined as particles comprising metal oxides and/or derivatives that can undergo cyclic reduction and oxidation reactions wherein there is a change in the oxidation state of one or more chemical species within these particles. The proposed system can include one type or multiple types of such active solid particles.

Factors such as reactivity, recyclability, particle size and mechanical strength along with oxygen carrying capacity have been considered in the design and development of these oxygen carrier particles. One or more than one active ingredient can be present in the active solid particles as long as they are capable of showing changes in oxidation state during the redox loop.

Active solid particles can comprise of either a single phase or it can be a mixture of several active phases. Transition metal oxides such as iron oxide ($Fe_2O_3$), copper oxide (CuO), nickel oxide (NiO), manganese oxide ($Mn_2O_3$), cerium oxide ($CeO_2$), cobalt oxide ($Co_3O_4$), tungsten oxide ($WO_3$), vanadium oxide ($V2O_5$), calcium and iron oxides ($Ca_2Fe_2O_5$), and combinations thereof, can be added to the active solid particles as they possess high oxygen carrying capacity and good reactivity among all the transition metal oxide candidates.

Recyclability and strength of exemplary active solid particles can be enhanced by adding support metal oxides to the active solid particles. Support material added to the active solid particles can be any support material that is known and used in the art. Examples include lithium (Li), beryllium (Be), boron (B), sodium (Na), magnesium (Mg), aluminum (Al), silicon (Si), potassium (K), calcium (Ca), scandium (Sc), titanium (Ti), vanadium (V), chromium (Cr), manganese (Mn), cobalt (Co), zinc (Zn), gallium (Ga), germanium (Ge), rubidium (Rb), yttrium (Y), zirconium (Zr), niobium (Nb), molybdenum (Mo), cadmium (Cd), indium (In), tin (Sn), antimony (Sb), caesium (Cs), barium (Ba), lanthanum (La), cerium (Ce), thorium (Th), and combinations thereof. In some embodiments, exemplary support materials can include, $SiO_2$, MgO, $Al_2O_3$, $TiO_2$, SiC, or a combination that comprises two or more of the support materials.

The weight percentage of support material present in the active solid particles can vary between 1-99%. In various implementations, weight percentage of support material present in the active solid particles can be 1-99%; 1-50%; 50-99%; 1-25%; 25-50%; 50-75%; 75-99%; 1-10%; 10-20%; 20-30%; 30-40%; 40-50%; 50-60%; 60-70%; 70-80%; 80-90%; or 90-99%. A remainder of weight percentage of the active solid particles may comprise one or more metal oxides and, in some implementations, one or more dopants.

Metal oxide reactivity can be improved further by incorporating dopants into the active solid particles. One or more dopants may comprise 0 wt% to about 5 wt% of the active solid particles. In various instances, active solid particles may comprise 0 wt% to 5 wt%; 1 wt% to 5 wt%; 2 wt% to 5 wt%; 3 wt% to 5 wt%; 1 wt% to 4 wt%; 1 wt% to 3 wt%; 1 wt% to 2 wt%; 2 wt% to 3 wt%; 3 wt% to 4 wt%; or 4 wt% to 5 wt% dopant.

Different elements that can be doped into the active solid particles include but are not limited to nickel (Ni), cobalt (Co), copper (Cu), scandium (Sc), titanium (Ti), vanadium (V), chromium (Cr), manganese (Mn), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), lutetium (Lu), hafnium (Hf), tantalum (Ta), tungsten (W), rhenium (Re), osmium (Os), iridium (Ir), platinum (Pt), and gold (Au). These catalytic dopants can provide active sites on the oxygen carrier surface for adsorption of the reducing gas molecule along with creation of vacancies in the oxygen carrier lattice, thus increasing the rates of ionic diffusion.

Size of the active solid particles may affect both reaction rates as well as governs the hydrodynamics of the chemical looping processes included in this disclosure. The size (diameter) of exemplary active solid particles (spherical in shape) can vary between 0.05 mm to 5 mm. Change in size of the active solid particles can modify the surface-to-volume ratio of the particles, thus affecting the reduction/oxidation kinetics. Also, size of the active solid particles governs operating parameters of the chemical looping processes such as minimum fluidization velocity, reactor sizing and pressure drop across various locations in the reactor.

Active solid particles can be classified into oxygen uncoupling particles (OUPs) and non-oxygen uncoupling particles (NOUPs). The OUPs may comprise one or more chemical species that can decompose and release molecular oxygen at the operating temperature without the presence of reducing agents. Examples of such chemical species include, but are not limited to $CuO$, $Mn_2O_3$, and $Co_3O_4$. In some instances, OUP active solid particles can also comprise other active ingredients.

NOUPs, on the other hand, may include one or more active metal oxides that do not possess oxygen uncoupling capability. That is, active ingredient(s) of NOUPs do not decompose and release molecular oxygen at the operating temperature without the presence of reducing agents. These active ingredients can only donate oxygen when reducing agents are present. Examples of such active ingredients include, but are not limited to, $Fe_2O_3$, $NiO$, and $CeO_2$. In some instances, NOUPs may include inert ingredients.

### B. Inert solid particles

Inert solid particles are defined as those particles that do not take part in any chemical reaction occurring in the chemical looping system. Inert solid particles serve to maintain a favorable temperature profile within the system. Inert solid particles are generally desirable to possess high heat capacity and high thermal conductivity. Inert solid particles should be designed to have high mechanical strength as well to reduce losses through attrition. Inert solid particles can be made from (non-limiting) the refractory materials commonly used in the art.

Examples of inert solid particles (non-limiting) are $SiO_2$, $Al_2O_3$, $CaO$, $MgO$, aluminosilicates such as kaolin and mullite, alumina-zirconia-silica, $CaAl_2O_4$, $CaAl_4O_7$, etc. Size, shape and particle density of the inert solid particles can be designed to be grossly similar to those of the oxygen carrier particles so that the inert solid particles and oxygen carrier particles can be operated in similar hydrodynamic regimes in the chemical looping processes included in this disclosure. Inert solid particles, however, can also be designed to have size and particle density different from the active solid particles as long as the terminal velocity of both sets of particles is the same. This ensures pneumatic transfer of all the particles from one reactor to another. Inert solid particles can have size ranging from 0.05-5 mm and particle density ranging from 1000 to 5000 $kg/m^3$.

### C. Exemplary combinations of particles

Various combinations of active solid particles and inert solid particles may be used in exemplary chemical looping systems. Exemplary systems and methods include inert solid particles and at least one type of active solid particles.

For instance, some implementations may include one type of inert solid particle, one type of active solid particle that is an oxygen uncoupling particle (OUP), and one type of inert solid particle that is a non-oxygen uncoupling particle (NOUP). Some implementations may include one type of active solid particle that is a non-oxygen uncoupling particle (NOUP) and one type of inert solid particles. Some implementations may include one type of active solid particle that is an oxygen uncoupling particle (OUP) and one type of inert solid particle. Some implementations may include one type of inert solid particle and two different types of active solid particles that are oxygen uncoupling particles (OUP). Some implementations may include one type of inert solid particle and two different types of active solid particles that are non-oxygen uncoupling particles (NOUP). Other combinations are contemplated.

Active solid particles may have an active particle density in the reactors ranging from 1000 $kg/m^3$ to 5000 $kg/m^3$. In various instances, exemplary reactors may have an active particle density of 1000 to 5000 $kg/m^3$; 1000 $kg/m^3$ to 2500 $kg/m^3$; 2500 $kg/m^3$ to 5000 $kg/m^3$; 1000 $kg/m^3$ to 2000 $kg/m^3$; 2000 $kg/m^3$ to 3000 $kg/m^3$; 3000 $kg/m^3$ to 4000 $kg/m^3$; or

$4000 \text{ kg/m}^3$ to $5000 \text{ kg/m}^3$.

Inert solid particles may have an inert particle density in the reactors ranging from $1000 \text{ kg/m}^3$ to $5000 \text{ kg/m}^3$. In various instances, exemplary reactors may have an inert particle density of 1000 to $5000 \text{ kg/m}^3$; $1000 \text{ kg/m}^3$ to $2500 \text{ kg/m}^3$; $2500 \text{ kg/m}^3$ to $5000 \text{ kg/m}^3$; $1000 \text{ kg/m}^3$ to $2000 \text{ kg/m}^3$; $2000 \text{ kg/m}^3$ to $3000 \text{ kg/m}^3$; $3000 \text{ kg/m}^3$ to $4000 \text{ kg/m}^3$; or $4000 \text{ kg/m}^3$ to $5000 \text{ kg/m}^3$.

Relatively, an active particle density may be no more than 40% greater, no more than 30% greater; no more than 20% greater; or no more than 10% greater than an inert particle density. Relatively, an active particle density may be no more than 40% less than, no more than 30% less than; no more than 20% less than; or no more than 10% less than an inert particle density. In some instances, the relative active particle density is selected such that active solid particles and inert solid particles have similar (e.g., within 10%) terminal velocities.

A ratio of inert solid particles to active solid particles may be 0.25:1 to 1:1. In various instances, a ratio of inert solid particles to active solid particles may be 0.25:1 to 0.5:1; 0.5:1 to 1:1; 0.25:1 to 0.75:1; 0.4:1 to 0.8:1; or 0.6:1 to 0.9:1.

**II. Impact of metal oxide concentration on reaction kinetics**

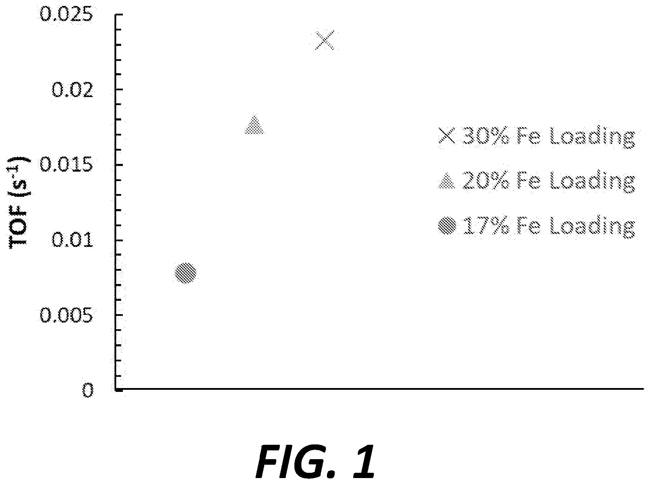

FIG. 1 shows the change in the turnover frequency (TOF) for particles with different Fe loadings. The TOF has been calculated using the following equations:

$$TON = \frac{No.\,of\;moles\;of\;reactant\;consumed}{No.\,of\;moles\;of\;Fe_2O_3\;in\;the\;particle}$$

$$TOF = \frac{TON}{Reaction\;time}$$

The TOF increases with an increase in the Fe loading as a higher number of active sites are available for $CH_4$ adsorption on the particle surface. As a result, the solid conversion increases for a fixed reaction time. Moreover, higher Fe loading corresponds to more Fe sites exposed on the surface, which translates into more oxygen vacancies on the particle surface. The formation of these vacancies facilitates $CH_4$ adsorption and activation, thus leading to a lower activation energy. This result shows that at a constant temperature and similar $CH_4/Fe_2O_3$ ratio, the activation energy decreases and thereby leads to an increase in the reaction rates (increase in the rate constant). Consequently, having different particles with varying concentration of active ingredient, for example (but not limited to) Fe can help achieve enhanced fuel conversion.

Typically, exemplary reducer reactors (or fuel reactors) operate without the need of any external heating, so the heat carried by regenerated particles from the combustor (or air reactor) is required to maintain endothermicity of the reducer. As result, a temperature drop may be created along the length of the reducer where the top and bottom are at the highest and lowest temperatures, respectively. The inert fraction of the oxygen carriers is responsible for conveying heat between the two reactors, whereas the active component undergoes cyclic redox for fuel conversion. The following example illustrates a two-particle system in the given scenario.

The kinetics of Fe-based particles with 17% Fe loading (by wt.) are slower than that of particles with 30% Fe loading. Based on optimized operating conditions (reactor top and bottom temperatures, system pressure, $CH_4$ and oxygen carrier flowrates, etc.), a reactor may be designed with a specific volume to provide the desired residence time for solids (and gases consequently) with 17% Fe loading. If these particles are replaced with particles containing 30% Fe loading such that the net Fe content in the system is still 17% using a combination of active (particles with 30% Fe loading) and inert particles, the solids residence time can be dropped because of faster kinetics of the new active particles. For a fixed flowrate of solids, the drop in the residence time corresponds to a smaller reactor volume, thereby leading to the lowering of capital cost requirements.

To illustrate, Case 1 uses only 17% Fe loaded particles, has a net oxygen carrier flowrate of 100 kg/hr, which results in a net Fe content in the system of 17 kg/hr. Case 2 uses a combination of 30% Fe loaded particles with inert particles. Case 2 has a net oxygen carrier flowrate of 100 kg/hr. Thus, the amount of 30% Fe loaded particles required is 56.67 kg/hr (Net Fe content: 56.67*0.3= 17kg/hr), and inert particles required is 43.33kg/hr. As seen from the calculations, the amount of active material still stays the same. However, by using a combination of two different types of particles, the process can be made more economic due to the enhancement in reaction kinetics.

In addition, although the ratio between the active and inert particles can be theoretically determined, the active particles can be put in excess or in limited amounts based on system requirements. For example, to take into account the non-idealities of a chemical reactor, the active particles may be provided in excess to ensure contact between the particles and $CH_4$ and thus complete fuel conversion. Similarly, the ratio can also be decided based on the type of feedstock used in the process. For example, for solid feedstocks, a combination of oxygen uncoupling particles (OUPs) and non-oxygen uncoupling particles (NOUPs) can be used with a higher amount of OUPs to achieve higher degrees of solid conversion.

**III. Exemplary design strategies**

An example method is discussed below that may optimize kinetic performance of chemical looping systems.

**A. Step 1: Determining the overall operating conditions of the chemical looping system for beneficial thermodynamic behavior**

The first step of particle design is to optimize the operating parameters of the chemical looping system solely from the aspects of thermodynamics. The feed ratio between fuel and oxygen carrier in the system will be optimized to achieve favorable system performance in alignment of the objective of the chemical looping process, i.e. high $H_2$ and CO concentration and low $CO_2$ and unreacted carbon in the application of syngas production, or full oxidation of fuel into $CO_2$ and $H_2O$ in chemical looping combustion or water-splitting applications. This thermodynamic adjustment mainly involves two parameters.

One parameter is the ratio between the active ingredient and fuel. This mainly determines the amount of oxygen that is transferred from the oxygen carrier to the fuel. For syngas production applications, this amount should be neither too high nor too low. If the ratio is too low, some carbon might remain unreacted. If this ratio is too high, the syngas might be further oxidized into $CO_2$ and $H_2O$. For full fuel oxidation, this ratio should be sufficiently high to ensure full oxidation of fuel into $CO_2$ and $H_2O$, but not so high as to render the reactor size unnecessarily large.

Another parameter is the amount of inert ingredient in the oxygen carrier material. The inert ingredient does not donate oxygen to the fuel; however, they still exert influence on the performance of the chemical looping system by mitigating the temperature change in the reactor caused by the endothermicity or exothermicity of the reactions inside. For example, when $Fe_2O_3$ is used as the active ingredient which reacts with carbonaceous fuels in a moving bed reducer, the overall reaction in the reducer is endothermic. This results in a temperature decrease along the moving bed reducer, which is usually operated adiabatically. Adding inert material to the oxygen carrier while maintaining constant $Fe_2O_3$ to fuel ratio, this temperature decrease can be mitigated, resulting in more favorable kinetics at the reducer bottom.

Besides the ratio between each ingredient of the oxygen carrier and the fuel, other factors might also be determined during this step. These factors may include but are not limited to the system temperature, pressure, additional feedstock (for example $H_2O$, $CO_2$, natural gas, etc. to manipulate the syngas composition) injection rate, etc. The purpose of step 1 is to adjust multiple parameters that have influence on the thermodynamic equilibrium of the chemical looping process, in order to arrive at a set of operating conditions with favorable system performance.

**B. Step 2: Dividing the solid materials according to composition to enhance the kinetic performance**

Step 1 determines the flow rate of each ingredient of the oxygen carrier based on unit amount of fuel injection to achieve favorable system performance. The objective of step 2 is to arrange each ingredient of the oxygen carrier into particles in order to optimize the kinetics of the system. Assume that it has been determined via step 1 that the entire amount of oxygen carrier particles contains n different ingredients, and the mass flow of each ingredient is $m_1$, $m_2$, ..., $m_n$. There are various methods of combining these ingredients into particles. For example, one way is to make only one type of particles where the mass fraction of ingredient i in this particle is $m_i/(m_1+m_2+...+m_n)$. This represents the conventional way of operating the chemical looping system with only one type of particles. Another way is to make two types of particles: type (a) and type (b). For the type (a) particles, the total mass flow of ingredients i is chosen as $m_{ai}$. For the type (b) particles, the total mass flow of ingredient i is chosen $m_{bi}$, such that $m_{ai}+m_{bi}=m_i$. Yet another way is to make three types of particles. (a), (b), and (c). The total mass flow rates of ingredient i in particles (a), (b), and (c) are $m_{ai}$, $m_{bi}$ and $m_{ci}$, respectively, where $m_{ai}+m_{bi}+m_{ci}=m_i$. This strategy can be further extended to a system with n types of particles, where n can be any positive integer, and $m_{ai}+m_{bi}+...+m_{ni}=m_i$. Note that in all cases with two or more than two types of particles, $m_{ji}$ (j=a,b,c,...; i=1,2,3,...) can have zero or non-zero values. Following this design strategy, some types of particles may be designed to be without ingredients capable of donating oxygen to the fuel in a redox chemical looping system. These particles are named as inert solid particles, as described in the previous section.

Using the strategy described above usually does not alter the thermodynamic behavior of the system, because the total flow rate of each component in the system remains constant. However, this strategy can change the kinetic behavior of the system by influencing the reaction rates between fuel and different types of particles of different compositions. By manipulating the ways by which the particles are divided into different types, the system kinetics can be enhanced compared to the case where only one type of particles is used. An improved reaction rate results in a smaller size of the reactor processing fuels at the same rate, and a smaller reactor can lead to savings in capital and operating costs.

### C. Step 3: Designing the particles with high physical strength and uniform hydrodynamic properties

After separating the solid materials into different types of particles, the next step is to design the particles properly to ensure high physical strength and uniform hydrodynamic properties. The considerations during the design of the particles include, but are not limited to, the diameter of the particle, the spatial arrangement of each component, as well as the synthesis methods adopted. The objective is to achieve high particle strength that can enable the particles to sustain an acceptably large number of redox cycles. Another consideration in designing the particles is the hydrodynamic properties of different types of particles. These properties should be grossly similar so that different types of particles can circulate through the bed with similar circulatory behaviors. Especially, the terminal velocities of different types of particles should be grossly similar, so that they can circulate inside the system with similar time per cycle. However, the sizes and densities of different types of particles can be different. One of the motivations of doing so is to facilitate the separation of particles according to their types, when such a separation is required.

### D. Step 4. Adjust the particle design to improve the performance of the system

Step 3 provides insight into the performance of the particles inside a practical system. Based on the experimental results, the particle design may need to be adjusted to further enhance the performance of the particles inside a realistic system. In addition to adjusting the amount of individual ingredients in each type of particles, the total amount of each ingredient inside the entire particle system may also need to be adjusted, hence causing the overall particle composition to deviate from the optimal values determined in step 1. This is because the realistic system may not be able to achieve the thermodynamic equilibrium as predicted via thermodynamic calculation. As a result, the optimum operating conditions in a practical system may be different from those obtained via thermodynamic calculations.

It is noted that the four steps described above may not necessarily need to be followed in a strict order. Iteration and repetition are sometimes required. The outcome of later step(s) may be used to alter the design in the previous step(s). The overall objective of taking these four steps is to arrive at a set of types of particles that enable the production of favorable syngas with good thermodynamic, kinetic, and hydrodynamic performance.

### IV. Exemplary Reactor configurations

Exemplary chemical looping systems may have various configurations, and embodiments are discussed below.

Generally, exemplary chemical looping systems may include a reducer reactor and a combustor reactor in fluid communication with the reducer reactor. Example reducer reactors may be arranged as a co-current moving bed, a counter-current moving bed, a fluidized bed, a fixed bed, a gas switching fixed bed, a rotary kiln, or a downer. Example combustor reactors may be arranged as a co-current moving bed, a counter-current moving bed, a fluidized bed, a fixed bed, a gas switching fixed bed, a rotary kiln, a downer, or a riser. In some embodiments, exemplary chemical looping systems may additionally comprise a third reactor, which may be an oxidizer reactor.

Exemplary reducer reactors may include active solid particles and inert solid particles. Example active solid particles are discussed in greater detail above, and may include a metal oxide and can be capable of cycling between a reduction reaction and an oxidation reaction. Example inert solid particles are discussed in greater detail above, and may comprise a refractory material and are not reactants in either the reduction reaction or the oxidation reaction.

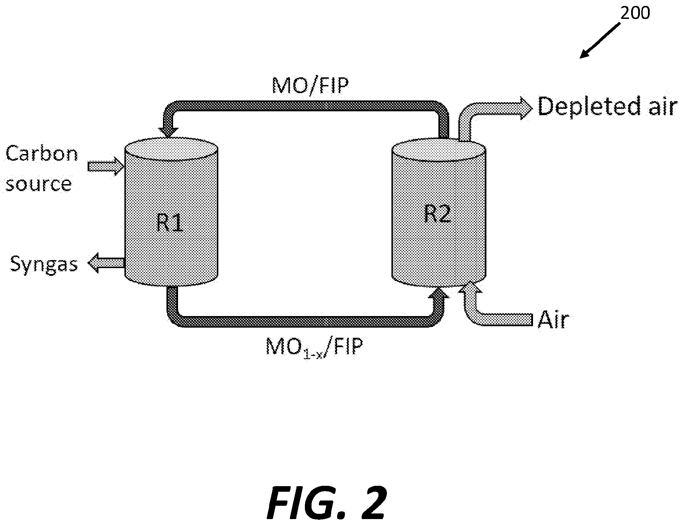

FIG. 2 is a schematic diagram of example reactor system 200 which may be configured for syngas production. Carbonaceous fuels such as natural gas, shale gas, biogas, biomass, coal, or petroleum coke can be used as feedstock. Fully oxidized active solid particles (denoted as MO in the figure) as well as inert solid particles flow from reactor R2 into reactor R1 where the active solid particles react with the carbon source to produce syngas while the reduced oxygen carriers ($MO_{1-x}$) are regenerated in reactor R2. Reactor R1 can be operated in any types of multiphase flow reactors such as a moving bed, a fluidized bed, and an entrained bed with the gas-solid contact pattern being either co-current or countercurrent. Reactor R2 is typically operated as a fluidized bed, but can be in other contact modes as well, such as co-current or countercurrent gas-solid contact patterns. Steam/$CO_2$ can be co-fed along with the carbonaceous feedstock to manipulate the syngas quality by changing the $H_2$:CO ratio of the syngas produced. Exemplary reactions in system 200 may include the following reactions, using $Fe_2O_3$-based active solid particles as an example:

Reactor 1 (R1): $Fe_2O_3 + H/C \rightarrow Fe/FeO + CO + H_2$
Reactor 2 (R2): $Fe/FeO + O_2 \rightarrow Fe_2O_3$

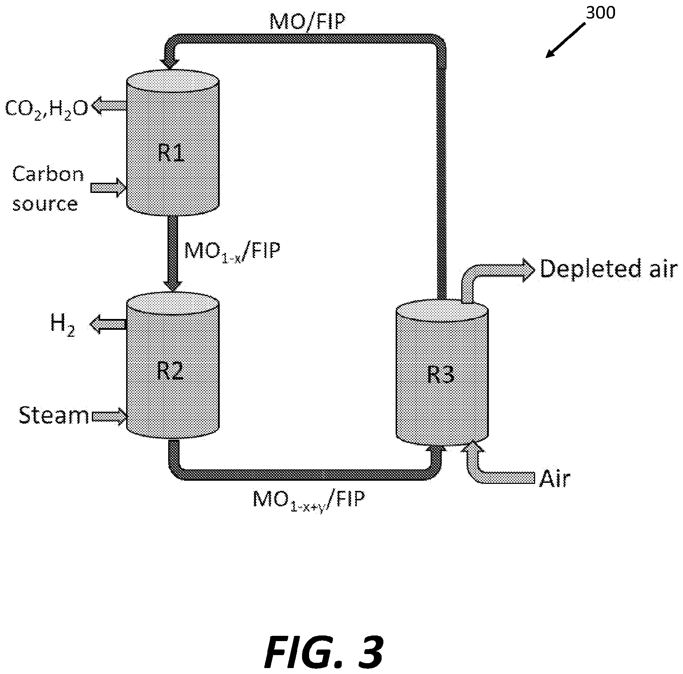

FIG. 3 is a schematic diagram of example reactor system 300 which may be configured for hydrogen production. Feedstocks that can be used for reducing the fully oxidized active solid particles (denoted as MO in the figure) in reactor R1 include, but are not limited to, natural gas, shale gas, biogas, biomass, coal and petroleum coke. The reduced active solid particles ($MO_{1-x}$) may be partially oxidized using steam in reactor R2 to produce hydrogen. These partially oxidized active solid particles ($MO_{1-x+y}$) are sent to reactor R3 where they may be fully regenerated in air. Reactor R1 and reactor R2 can be operated in any types of multiphase flow reactors such as a moving bed, a fluidized bed, and an entrained bed with the gas-solid contact pattern being either co-current or countercurrent. The gas-solid flow pattern can be adjusted to produce either syngas (co-current flow) or generate pure $CO_2$ (countercurrent flow) in reactor R1. Reactor R3 is typically operated as a fluidized bed, but can be in any other contact mode as well, such as co-current or countercurrent gas-solid contact patterns. Exemplary reactions occurring in reactor system 300 are shown below using $Fe_2O_3$-based active solid particles as an example:

Reactor 1 (R1): $Fe_2O_3 + H/C \rightarrow Fe/FeO + CO_2 + H_2O$

Reactor 2 (R2): $Fe/FeO + H_2O \rightarrow Fe_3O_4 + H_2$

Reactor 3 (R3): $Fe_3O_4 + O_2 \rightarrow Fe_2O_3$

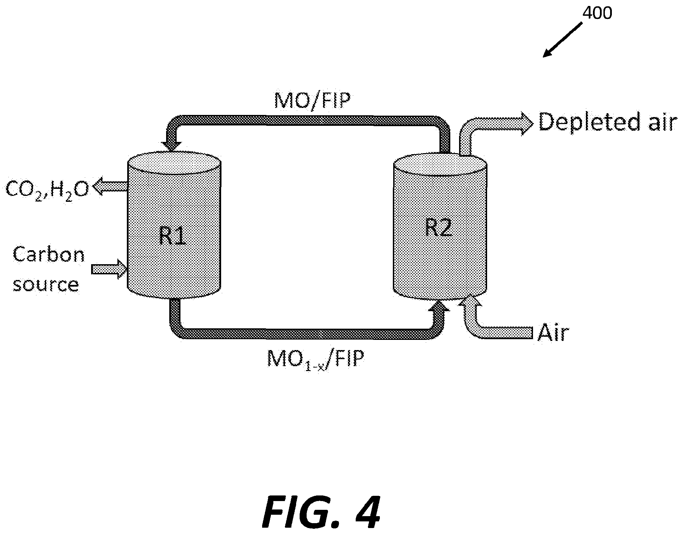

FIG. 4 is a schematic diagram of example reactor system 400 which may be configured for heat and/or electricity generation with carbon dioxide ($CO_2$) capture. Carbon-based feedstock may include, but is not limited to, natural gas, shale gas, coal, biomass and petroleum coke. Exemplary carbon-based feedstock may be fully combusted using exemplary active solid particles (denoted as MO in the figure) in reactor R1 to produce $CO_2/H_2O$. Reduced active solid particles ($MO_{1-x}$) may be regenerated using air in reactor R2, where excess heat may be produced because of exothermic reaction(s). Reactor R1 can be operated in various types of multiphase flow reactors, such as a moving bed, a fluidized bed, and an entrained bed with the gas-solid contact pattern being either co-current or countercurrent. Reactor R2 is typically operated as a fluidized bed, but can be in any other contact modes as well with co-current or countercurrent gas-solid contact pattern. Extraction of the excess heat produced can be achieved using several techniques including, but not limited to, an in-bed heat exchanger. Exemplary reactions in reactor system 400 are given below using $Fe_2O_3$-based active solid particles as an example:

Reactor 1 (R1): $Fe_2O_3 + H/C \rightarrow Fe_3O_4 + CO_2 + H_2O$

Reactor 2 (R2): $Fe_3O_4 + O_2$ (from air) $\rightarrow Fe_2O_3$

### V. Exemplary Methods of Operation

Various methods may be performed to operate various chemical looping reactor configurations. An example method is provided below.

An example method for operating a chemical looping system may begin by providing active solid particles and inert solid particles to a reducer reactor. The reducer reactor may be operated at a temperature of 600 °C to 1300 °C and at a pressure of 0.5 atm to 50 atm. A molar ratio between gas and solid in the reducer reactor can be between 0.01 and 100.

The active solid particles may include a metal oxide and may be capable of cycling between a reduction reaction and an oxidation reaction. The inert solid particles may comprise a refractory material and are not reactants in either the reduction reaction or the oxidation reaction. Additional details regarding exemplary active solid particles and exemplary inert solid particles are discussed above.

The example method may also include providing a carbonaceous feedstock to the reducer reactor. The reduction reaction can include the carbonaceous feedstock and the active solid particles and generates a first product gas stream. In some instances, the carbonaceous feedstock may be coal, biomass, natural gas, shale gas, biogas, or petroleum coke.

During the reduction reaction, lattice oxygen is transferred from the active solid particles to the carbonaceous feedstock, thereby generating reduced active solid particles.

In some instances, the example method may include providing steam, carbon dioxide ($CO_2$), or a combination thereof, to the reducer reactor. Adding steam, carbon dioxide ($CO_2$), or a combination thereof may manipulate the syngas composition exiting the reducer. That is, adding steam, carbon dioxide ($CO_2$), or a combination thereof may help increase the yield of the first product gas stream.

In various instances, steam, carbon dioxide ($CO_2$), or a combination thereof, may be provided to the reducer reactor along with the carbonaceous feedstock. Alternatively, steam, carbon dioxide ($CO_2$), or a combination thereof, may be provided to the reducer reactor at any point along a length of the reducer reactor.

In some instances, the first product gas stream can include one or more of: unconverted gaseous fuel, unconverted volatile components of solid feedstocks, hydrogen ($H_2$), carbon monoxide (CO), $CO_2$ and steam.

The example method may also include providing the reduced active solid particles and oxidizing agent to a combustor reactor. The combustor reactor may be operated at a temperature of 600 °C to 1300 °C and at a pressure of 0.5 atm to 50 atm. A molar ratio between gas and solid in the combustor reactor can be between 0.01 and 100.

An oxidation reaction occurring in the combustor reactor can include the reduced active solid particles and the oxidizing agent to replenish the lattice oxygen and generate a second product gas stream.

In some instances, the oxidizing agent can include at least one of: steam, carbon dioxide ($CO_2$), and air. In some instances, the second product gas stream can include one or more of: hydrogen ($H_2$), steam, carbon monoxide (CO), carbon dioxide ($CO_2$), nitrogen ($N_2$), and oxygen ($O_2$).

The example method may also include providing the active solid particles from the combustor reactor to an oxidizer reactor. The oxidizer reactor may be operated at a temperature of 600 °C to 1300 °C and at a pressure of 0.5 atm to 50 atm. A molar ratio between gas and solid in the oxidizer reactor can be between 0.01 and 100.

An air stream may also be provided to the oxidizer reactor, and the active solid particles may be regenerated in the oxidizer reactor. A depleted air stream may be collected from the oxidizer reactor. The regenerated active solid particles may be provided to the reducer reactor.

### VI. Experimental Examples

Experimental examples were conducted, and various aspects are discussed below.

### A. Experimental Particles

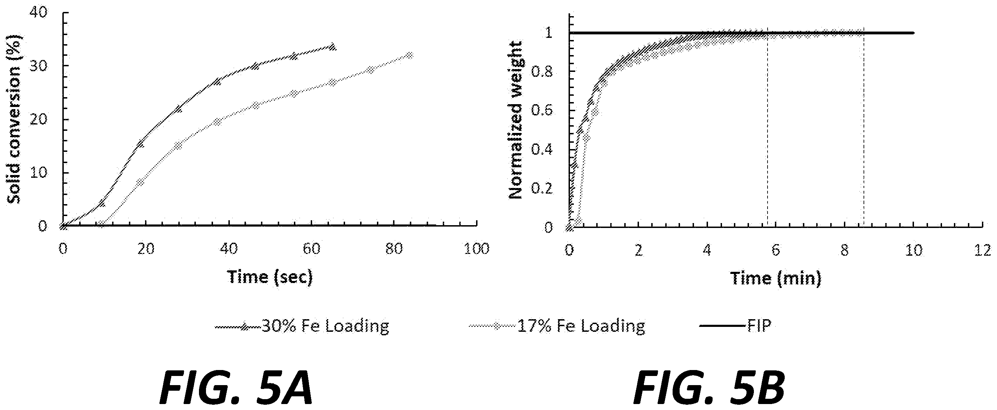

Experiments were performed using $Al_2O_3$-supported $Fe_2O_3$-based oxygen carrier composites to validate its use (or that of similar metal oxide-based oxygen carriers) in the chemical looping processes included in this disclosure. Reduction and oxidation experiments were performed isothermally at 1000°C and 1 atm in a thermogravimetric analyzer (TGA) to obtain kinetics data, as shown in FIG. 5A and FIG. 5B. Reduction was carried out by sending 250 ml/min reducing gas with 40% methane concentration, remaining balanced with $N_2$. Both the oxygen carrier composite samples were reduced up to 33% solid conversion (definition given below), which pertains to the change in oxidation state of Fe from +3 ($Fe_2O_3$) to +2 (FeO). Solid conversion is defined as an amount of oxygen atoms removed from oxygen carrier divided by a total amount of oxygen atoms available from oxygen carrier particles. In this instance, solid conversion was 0 for $Fe_2O_3$, 0.11 for $Fe_3O_4$, 0.33 for FeO, and 1 for Fe.

Similarly, oxidation was carried out by sending 200 ml/min air (~21% $O_2$) at 1000°C into the TGA. As seen in FIG. 5A, the time required for the oxygen carrier composite to reach 33% solid conversion decreases by 22.22% when oxygen carrier with 30% $Fe_2O_3$ is used as compared to 17% $Fe_2O_3$. Oxidation kinetics also show an increase by 32.3% when the oxygen carrier with higher Fe content was used as depicted in FIG. 5B. On the other hand, the inert solid particles do not participate in reduction or oxidation reactions in the system, thus showing constant solid conversion and normalized weight as illustrated in FIG. 5A and FIG. 5B. This improvement in kinetics is attributed to lowering of the support material present in the oxygen carrier composite. Presence of higher amount of support material in the oxygen carrier increases gas diffusion resistance and reduces the ionic diffusion rates, thus lowering the reaction rates.

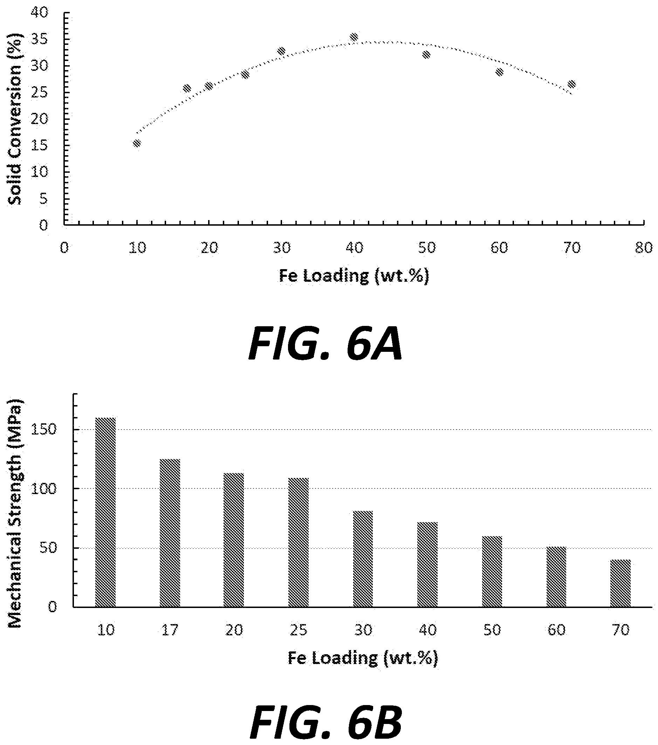

FIG. 6A shows the change in solid conversion (degree of reduction) occurring in the oxygen carriers as a function of Fe concentration in the particles. Oxygen carriers with different $Fe_2O_3$ concentrations were prepared with $Al_2O_3$ as the support material. All the oxygen carriers were subjected to reduction using the experimental conditions as described earlier in this section. The solid conversion values reported were obtained at the end of 1 min after sending in the reducing gas.

As seen from FIG. 6A, the solid conversion initially increases with the increase in Fe concentration as more active sites are available for $CH_4$ adsorption and subsequent oxidation. However, beyond Fe loading of 40% (by wt.), the solid conversion drops, which is attributed to increased diffusion resistance to the gas molecules offered by the increased support concentration in the oxygen carrier.

FIG. 6B shows the change in mechanical strength of fresh oxygen carriers as a function of Fe loading, where the strength decreases with increase in active metal oxide loading (due to drop in support concentration). As shown, selection of metal oxide loading can impact both reactivity and physical integrity. Amounts of metal oxide loading may be selected to provide desired reactivity balanced with desired physical integrity.

The experimental results demonstrate that for the Fe-Al oxygen carrier, 30% $Fe_2O_3$ provided better reaction kinetics than 17% $Fe_2O_3$. However, in an autothermal chemical looping system, the use of one type of particles with 30% $Fe_2O_3$ renders the reactor temperature and product yield unfavorable. This challenge can be alleviated by using a combination of oxygen carrier particles with higher active ingredient concentration along with inert particles. Potential benefits in process efficiency and economics of this multiple-type particle approach will be elaborated in the following section.

### B. Thermodynamic and Economic Analyses

Thermodynamic analysis was conducted on the chemical looping natural gas reforming system using moving bed reducer to demonstrate the benefits of using different types of particles in one system. The chemical looping moving beds of industrial scale typically operate under adiabatic conditions, i.e. no heat exchange with the outside. The main reactions in the reducer can be highly endothermic, causing the temperature to decrease along the moving bed reactor. When the temperature at a lower portion of a reducer reactor is too low, both reaction kinetics and thermodynamics become less favorable to syngas production. Therefore, inert material, $Al_2O_3$ in this experimental example, is added to the $Fe_2O_3$ to form composite oxygen carrier materials to increase the heat capacity of the reactants, thus reducing the temperature decrease along the bed.

The influence of $Al_2O_3$ weight percentage on the system performance was studied using ASPEN Plus v.11. The moving bed reducer was simulated using an RGIBBS model, which assumes that thermodynamic equilibrium is always reached. The moving bed reducer was simulated under adiabatic conditions with an oxygen carrier inlet temperature of 1050 °C and $CH_4$ preheat temperature of 400 °C. The $Fe_2O_3/CH_4$ molar ratio was maintained at 1:1 in the simulation and only the amount of $Al_2O_3$ in the oxygen carrier was varied.

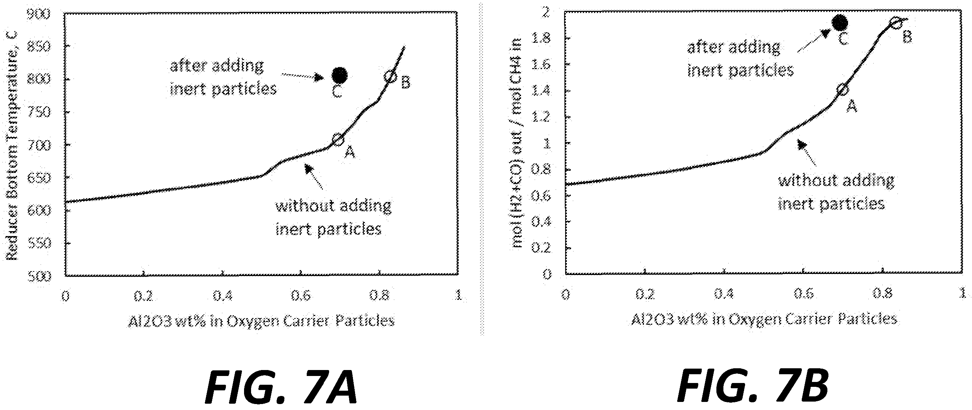

The effects of $Fe_2O_3$ weight percentage on the reducer reactor bottom temperature and syngas yield are plotted in FIG. 7A and FIG. 7B, respectively. As shown in FIG. 7A, the reducer reactor bottom temperature increases with increasing $Al_2O_3$ weight percentage, as a result of higher heat capacity and consequently lower temperature decrease along the bed. FIG. 7B shows that the syngas yield, defined as the molar flow of ($H_2$+CO) produced from the reducer reactor divided by the molar flow of $CH_4$ feedstock, keeps increasing as the $Al_2O_3$ weight percentage increases. This is because the syngas generation reactions are endothermic, thus favored at higher temperatures.

The influence of $Al_2O_3$ weight percentage on system performance can be quantitatively demonstrated by comparing Cases A and B, whose operating conditions are indicated in FIG. 7A and FIG. 7B. Details of Cases A and B are given in Table 1.

Table 1. Comparisons between the operating conditions and performance of Cases A, B and C, where oxygen carrier is an active solid particle

| Cases | A | B | C |
|---|---|---|---|
| $Fe_2O_3$ wt% in Oxygen Carrier | 30 | 17 | 30 |
| $Al_2O_3$ wt% in Oxygen Carrier | 70 | 83 | 70 |
| Oxygen Carrier Circulation Rate/$CH_4$ in, kg/kmol | 533 | 945 | 533 |
| Inert Solid Particles Circulation Rate/$CH_4$ in, kg/kmol | 0 | 0 | 412 |
| Total Solid Circulation Rate/$CH_4$ in, kg/kmol | 533 | 945 | 945 |
| Syngas Yield, mol/mol $CH_4$ in | 1.41 | 1.9 | 1.9 |
| Reducer Bottom Temperature, °C | 711 | 802 | 802 |
| Reaction Kinetics (Relative to Condition B) | <1.3 | 1 | 1.3 |
| Capital Cost (Relative to Condition B), Normalized by Syngas Production Capacity | >1.04 | 1 | 0.83 |
| Operating Cost (Relative to Condition B), Normalized by Syngas Production Capacity | 1.35 | 1 | 1 |

Case A uses particles with 70% $Al_2O_3$ while Case B uses particles with 83% $Al_2O_3$. The comparison shows that syngas yield is 1.41 for Case A and 1.9 for Case B as a result of the much lower reducer bottom temperature of Case A inhibiting the endothermic syngas generation reactions.

When the multiple-type particle strategy is applied to this system by using a combination of oxygen carrier particles with 30% $Fe_2O_3$, 70% $Al_2O_3$ together with inert solid particles, the system benefits from both a higher reducer bottom temperature and faster kinetics provided by the particles with more active ingredients. This operating condition is marked as Case C in FIG. 7A and FIG. 7B, with the details given in Table 1. Case C uses 533 kg of oxygen carrier particles composed of 70% $Al_2O_3$ and 30% $Fe_2O_3$ per mole of $CH_4$, which is equal to Case A. However, Case C also uses 412 kg of inert solid particles per mole of $CH_4$, making its total solid circulation rate equal to Case B. It is seen that Case C has identical reducer bottom temperature and syngas yield to Case B, but its kinetics is faster than Case B due to the use of particles with 70% $Al_2O_3$ as compared to 83% for Case B.

Capital and operating costs of Cases A, B and C are compared in Table 1, which shows that the increase in kinetics translates into smaller reactor size and hence lower capital cost. In the economic assessment, the capital cost is assumed to be proportional to the reactor size to the power of 0.7, while the operating cost is assumed to be proportional to the amount of $CH_4$ consumed to produce unit amount of syngas. The kinetics of particles with 30% $Fe_2O_3$ is approximated to be 30% faster than particles with 17% $Fe_2O_3$ based on experimental results. It is shown in Table 1 that the capital cost of condition C is 17% lower than condition B because of reduced reactor size due to faster kinetics. On the other hand, the operating cost of condition C is equivalent to condition B but much lower than condition A, because condition A consumes more $CH_4$ as feedstock to produce equal amount of syngas. In summary, condition C is the optimum condition among the three cases.

It is noted that the specific combination of particles discussed in Case C is good, but not optimized for the system performance. Further optimization of the process efficiency and economics can be conducted by using more than one type of active solid particle with different active ingredient concentrations in combination with inert solid particles in one system. The concentrations of active ingredients in the particles can vary, such as 10%, 20% and 40% of active ingredients in each type of the particles. In such a multiple-type particle system, the particles with higher concentration of active ingredients mainly serve as oxygen carriers and the particles with lower concentration of active ingredients mainly serve to maintain the temperature profile along with fully inert particles. The total number of the types of particles and the concentration of active ingredients in each type of particles can be adjusted to optimize the performance of the process system.

Unless otherwise defined, all technical and scientific terms used herein have the same meaning as commonly understood by one of ordinary skill in the art. In case of conflict, the present document, including definitions, will control. Example methods and materials are described below, although methods and materials similar or equivalent to those described herein can be used in practice or testing of the present disclosure. The materials, methods, and examples disclosed herein are illustrative only and not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The singular forms "a," "an" and "the" include plural references unless the context clearly dictates otherwise. The present disclosure also contemplates other embodiments "comprising," "consisting of" and "consisting essentially of," the embodiments or elements presented herein, whether explicitly set forth or not.

The modifier "about" used in connection with a quantity is inclusive of the stated value and has the meaning dictated by the context (for example, it includes at least the degree of error associated with the measurement of the particular quantity). The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

Definitions of specific functional groups and chemical terms are described in more detail below. For purposes of this disclosure, the chemical elements are identified in accordance with the Periodic Table of the Elements, CAS version, Handbook of Chemistry and Physics, 75th Ed., inside cover, and specific functional groups are generally defined as described therein.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated. For example, when a pressure range is described as being between ambient pressure and another pressure, a pressure that is ambient pressure is expressly contemplated.

**Claims**

1. A chemical looping system (200, 300, 400), comprising:

   a reducer reactor including active solid particles and inert solid particles,

   wherein the active solid particles include a metal oxide;
   wherein the active solid particles are capable of cycling between a reduction reaction and an oxidation reaction;
   wherein the inert solid particles comprise a refractory material; and
   wherein the inert solid particles are not reactants in either the reduction reaction or the oxidation reaction; and

   a combustor reactor in fluid communication with the reducer reactor, the combustor reactor configured to receive active solid particles and inert solid particles from the reducer reactor.

2. The chemical looping system according to claim 1, wherein the metal oxide is iron oxide ($Fe_2O_3$), copper oxide (CuO), nickel oxide (NiO), manganese oxide ($Mn_2O_3$), cerium oxide ($CeO_2$), cobalt oxide ($Co_3O_4$), tungsten oxide ($WO_3$), vanadium oxide ($V2O_5$), calcium and iron oxide ($Ca_2Fe_2O_5$), or combinations thereof, optionally wherein the metal oxide is CuO, $Mn_2O_3$, $Co_3O_4$, $Fe_2O_3$, NiO, or $CeO_2$.

3. The chemical looping system according to any one of claims 1-2, wherein the active solid particles further comprise a support comprising lithium (Li), beryllium (Be), boron (B), sodium (Na), magnesium (Mg), aluminum (Al), silicon (Si), potassium (K), calcium (Ca), scandium (Sc), titanium (Ti), vanadium (V), chromium (Cr), manganese (Mn), cobalt (Co), zinc (Zn), gallium (Ga), germanium (Ge), rubidium (Rb), yttrium (Y), zirconium (Zr), niobium (Nb), molybdenum (Mo), cadmium (Cd), indium (In), tin (Sn), antimony (Sb), caesium (Cs), barium (Ba), lanthanum (La), cerium (Ce), thorium (Th), and combinations thereof, optionally wherein the support is $SiO_2$, MgO, $Al_2O_3$, $TiO_2$, SiC, or a combination thereof.

4. The chemical looping system according to claim 3, wherein the weight percentage of support material is between 1 wt% and 99 wt% of the active solid particle.

5. The chemical looping system according to any one of claims 1-4, wherein the active solid particles further comprise one or more dopants selected from: nickel (Ni), cobalt (Co), copper (Cu), scandium (Sc), titanium (Ti), vanadium (V), chromium (Cr), manganese (Mn), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), lutetium (Lu), hafnium (Hf), tantalum (Ta), tungsten (W), rhenium (Re), osmium (Os), iridium (Ir), platinum (Pt), and gold (Au).

6. The chemical looping system according to any one of claims 1-5, wherein the refractory material includes $SiO_2$, $Al_2O_3$, CaO, MgO, aluminosilicates, kaolin, mullite, alumina-zirconia-silica, $CaAl_2O_4$, or $CaAl_4O_7$.

7. The chemical looping system according to any one of claims 1-6, wherein the reducer reactor further comprises second active solid particles, where the second active solid particles comprise different metal oxide than the active solid particles.

8. The chemical looping system according to any one of claims 1-7, wherein a ratio of inert solid particles to active solid particles is 0.25:1 to 1:1.

9. The chemical looping system according to any one of claims 1-8, further comprising an oxidizer reactor in fluid communication with the combustor reactor and the reducer reactor, the oxidizer reactor configured to receive active solid particles and inert solid particles from the combustor reactor.

10. The chemical looping system according to any one of claims 1-9, wherein the active solid particles:

    (i) have a diameter of from 0.05 mm to 5 mm and wherein the inert solid particles have a diameter of from 0.05 mm to 5 mm; and/or
    (ii) have an active particle density ranging from 1000 to 5000 $kg/m^3$ and wherein the inert solid particles have an inert particle density ranging from 1000 to 5000 $kg/m^3$, optionally wherein the active particle density is no more than 40% greater, or no more than 40% less than, the inert particle density.

11. The chemical looping system according to any one of claims 1-10, wherein the reducer reactor is arranged as a co-current moving bed, a counter-current moving bed, a fluidized bed, a fixed bed, a gas switching fixed bed, a rotary kiln, or a downer; and
    wherein the combustor reactor is arranged as a co-current moving bed, a counter-current moving bed, a fluidized bed, a fixed bed, a gas switching fixed bed, a rotary kiln, a downer, or a riser.

12. A method of operating a chemical looping system (200, 300, 400), the method comprising:

    providing active solid particles and inert solid particles to a reducer reactor,

        wherein the active solid particles include a metal oxide;
        wherein the active solid particles are capable of cycling between a reduction reaction and an oxidation reaction;
        wherein the inert solid particles comprise a refractory material; and
        wherein the inert solid particles are not reactants in either the reduction reaction or the oxidation reaction;

    providing a carbonaceous feedstock to the reducer reactor, wherein the reduction reaction includes the carbonaceous feedstock and the active solid particles and generates a first product gas stream, where lattice oxygen is transferred from the active solid particles to the carbonaceous feedstock, thereby generating reduced active solid particles; and

providing the reduced active solid particles, the inert solid particles, and oxidizing agent to a combustor reactor, the combustor reactor in fluid communication with the reducer reactor and configured to receive the reduced active solid particles and the inert particles from the reducer reactor, wherein the oxidation reaction includes the reduced active solid particles and the oxidizing agent to replenish the lattice oxygen and generate a second product gas stream.

13. The method according to claim 12, further comprising:

(i) providing the active solid particles from the combustor reactor to an oxidizer reactor; providing an air stream to the oxidizer reactor, wherein the active solid particles are regenerated in the oxidizer reactor; collecting a depleted air stream from the oxidizer reactor; and providing the regenerated active solid particles to the reducer reactor; and/or

(ii) providing steam, carbon dioxide ($CO_2$), or a combination thereof, to the reducer reactor; wherein the carbonaceous feedstock is coal, biomass, natural gas, shale gas, biogas, or petroleum coke; wherein the first product gas stream includes one or more of: unconverted gaseous fuel, unconverted volatile components of solid feedstocks, hydrogen ($H_2$), carbon monoxide (CO), $CO_2$ and steam; wherein the oxidizing agent includes at least one of: steam, carbon dioxide ($CO_2$), and air; and wherein the second product gas stream includes one or more of: hydrogen ($H_2$), steam, carbon monoxide (CO), carbon dioxide ($CO_2$), nitrogen ($N_2$), and oxygen ($O_2$).

14. The method according to any one of claims 12-13, wherein the reducer reactor and the combustor reactor are operated at a temperature of 600 °C to 1300 °C and at a pressure of 0.5 atm to 50 atm.

15. The method according to any one of claims 12-14, further comprising providing second active solid particles, the second active solid particles comprising a metal oxide different from the active solid particles.

**Patentansprüche**

1. Chemisches Kreislaufsystem (200, 300, 400), umfassend:

einen Reduktionsreaktor, der aktive Feststoffpartikel und inerte Feststoffpartikel einschließt, wobei die aktiven Feststoffpartikel ein Metalloxid einschließen;

wobei die aktiven Feststoffpartikel in der Lage sind, zwischen einer Reduktionsreaktion und einer Oxidationsreaktion zu wechseln;
wobei die inerten Feststoffpartikel ein feuerfestes Material umfassen; und wobei die inerten Feststoffpartikel weder in der Reduktionsreaktion noch in der Oxidationsreaktion Reaktanten sind; und

einen Verbrennungsreaktor in Fluidverbindung mit dem Reduktionsreaktor, wobei der Verbrennungsreaktor dazu konfiguriert ist, aktive Feststoffpartikel und inerte Feststoffpartikel aus dem Reduktionsreaktor aufzunehmen.

2. Chemisches Kreislaufsystem nach Anspruch 1, wobei das Metalloxid Eisenoxid ($Fe_2O_3$), Kupferoxid (CuO), Nickeloxid (NiO), Manganoxid ($Mn_2O_3$), Ceroxid ($CeO_2$), Kobaltoxid ($Co_3O_4$), Wolframoxid ($WO_3$), Vanadiumoxid (V2$O_5$), Calcium- und Eisenoxid ($Ca_2Fe_2O_5$) oder Kombinationen davon ist, wobei das Metalloxid optional CuO, $Mn_2O_3$, $Co_3O_4$, $Fe_2O_3$, NiO oder $CeO_2$ ist.

3. Chemisches Kreislaufsystem nach einem der Ansprüche 1 bis 2, wobei die aktiven Feststoffpartikel ferner einen Träger umfassen, der Lithium (Li), Beryllium (Be), Bor (B), Natrium (Na), Magnesium (Mg), Aluminium (Al), Silizium (Si), Kalium (K), Calcium (Ca), Scandium (Sc), Titan (Ti), Vanadium (V), Chrom (Cr), Mangan (Mn), Kobalt (Co), Zink (Zn), Gallium (Ga), Germanium (Ge), Rubidium (Rb), Yttrium (Y), Zirkonium (Zr), Niob (Nb), Molybdän (Mo), Cadmium (Cd), Indium (In), Zinn (Sn), Antimon (Sb), Cäsium (Cs), Barium (Ba), Lanthan (La), Cer (Ce), Thorium (Th) und Kombinationen davon, wobei der Träger optional $SiO_2$, MgO, $Al_2O_3$, $TiO_2$, SiC oder eine Kombination davon ist.

4. Chemisches Kreislaufsystem nach Anspruch 3, wobei der Gewichtsanteil des Trägermaterials zwischen 1 Gew.-% und 99 Gew.-% der aktiven Feststoffpartikel beträgt.

5. Chemisches Kreislaufsystem nach einem der Ansprüche 1 bis 4, wobei die aktiven Feststoffpartikel ferner ein oder mehrere Dotierstoffe umfassen, ausgewählt aus: Nickel (Ni), Kobalt (Co), Kupfer (Cu), Scandium (Sc), Titan (Ti), Vanadium (V), Chrom (Cr), Mangan (Mn), Zink (Zn), Yttrium (Y), Zirkonium (Zr), Niob (Nb), Molybdän (Mo), Technetium (Tc), Ruthenium (Ru), Rhodium (Rh), Palladium (Pd), Silber (Ag), Cadmium (Cd), Lutetium (Lu), Hafnium (Hf), Tantal (Ta), Wolfram (W), Rhenium (Re), Osmium (Os), Iridium (Ir), Platin (Pt) und Gold (Au).

6. Chemisches Kreislaufsystem nach einem der Ansprüche 1 bis 5, wobei das feuerfeste Material $SiO_2$, $Al_2O_3$, CaO, MgO, Alumosilikate, Kaolin, Mullit, Aluminiumoxid-Zirkoniumoxid-Siliziumdioxid, $CaAl_2O_4$ oder $CaAl_4O_7$ einschließt.

7. Chemisches Kreislaufsystem nach einem der Ansprüche 1 bis 6, wobei der Reduktionsreaktor ferner zweite aktive Feststoffpartikel umfasst, wobei die zweiten aktiven Feststoffpartikel ein anderes Metalloxid als die aktiven Feststoffpartikel umfassen.

8. Chemisches Kreislaufsystem nach einem der Ansprüche 1 bis 7, wobei das Verhältnis von inerten Feststoffpartikeln zu aktiven Feststoffpartikeln 0,25:1 bis 1:1 beträgt.

9. Chemisches Kreislaufsystem nach einem der Ansprüche 1 bis 8, ferner umfassend einen Oxidationsreaktor in Fluidverbindung mit dem Verbrennungsreaktor und dem Reduktionsreaktor, wobei der Oxidationsreaktor dazu konfiguriert ist, aktive Feststoffpartikel und inerte Feststoffpartikel aus dem Verbrennungsreaktor aufzunehmen.

10. Chemisches Kreislaufsystem nach einem der Ansprüche 1 bis 9, wobei die aktiven Feststoffpartikel:

    (i) einen Durchmesser von 0,05 mm bis 5 mm aufweisen und wobei die inerten Feststoffpartikel einen Durchmesser von 0,05 mm bis 5 mm aufweisen; und/oder
    (ii) eine aktive Partikeldichte in dem Bereich von 1000 bis 5000 $kg/m^3$ aufweisen und wobei die inerten Feststoffpartikel eine inerte Partikeldichte in einem Bereich von 1000 bis 5000 $kg/m^3$ aufweisen, wobei optional die aktive Partikeldichte nicht mehr als 40 % größer oder nicht mehr als 40 % kleiner als die inerte Partikeldichte ist.

11. Chemisches Kreislaufsystem nach einem der Ansprüche 1 bis 10, wobei der Reduktionsreaktor als Gleichstrom-Bewegungsbett, Gegenstrom-Bewegungsbett, Wirbelbett, Festbett, Gaswechsel-Festbett, Drehrohrofen oder Senker angeordnet ist; und
    wobei der Verbrennungsreaktor als Gleichstrom-Bewegungsbett, Gegenstrom-Bewegungsbett, Wirbelbett, Festbett, Gaswechsel-Festbett, Drehrohrofen, Senker oder Heber angeordnet ist.

12. Verfahren zum Betreiben eines chemischen Kreislaufsystems (200, 300, 400), wobei das Verfahren Folgendes umfasst:

    Bereitstellen aktiver Feststoffpartikel und inerter Feststoffpartikel für einen Reduktionsreaktor,

    wobei die aktiven Feststoffpartikel ein Metalloxid einschließen;
    wobei die aktiven Feststoffpartikel in der Lage sind, zwischen einer Reduktionsreaktion und einer Oxidationsreaktion zu wechseln;
    wobei die inerten Feststoffpartikel ein feuerfestes Material umfassen; und
    wobei die inerten Feststoffpartikel weder in der Reduktionsreaktion noch in der Oxidationsreaktion Reaktanten sind;

    Bereitstellen eines kohlenstoffhaltigen Ausgangsmaterials für den Reduktionsreaktor, wobei die Reduktionsreaktion das kohlenstoffhaltige Ausgangsmaterial und die aktiven Feststoffpartikel einschließt und einen ersten Produktgasstrom erzeugt, wobei Gitter-Sauerstoff von den aktiven Feststoffpartikeln auf das kohlenstoffhaltige Ausgangsmaterial übertragen wird, wodurch reduzierte aktive Feststoffpartikel erzeugt werden; und
    Bereitstellen der reduzierten aktiven Feststoffpartikel, der inerten Feststoffpartikel und Oxidationsmittel für einen Verbrennungsreaktor, wobei der Verbrennungsreaktor in Fluidverbindung mit dem Reduktionsreaktor steht und dazu konfiguriert ist, die reduzierten aktiven Feststoffpartikel und die inerten Partikel aus dem Reduktionsreaktor aufzunehmen, wobei die Oxidationsreaktion die reduzierten aktiven Feststoffpartikel und das Oxidationsmittel einschließt, um den Gitter-Sauerstoff aufzufüllen und einen zweiten Produktgasstrom zu erzeugen.

13. Verfahren nach Anspruch 12, ferner umfassend:

(i) Bereitstellen der aktiven Feststoffpartikel aus dem Verbrennungsreaktor für einen Oxidationsreaktor; Bereitstellen eines Luftstroms für den Oxidationsreaktor, wobei die aktiven Feststoffpartikel in dem Oxidationsreaktor regeneriert werden; Sammeln eines verarmten Luftstroms aus dem Oxidationsreaktor; und Bereitstellen der regenerierten aktiven Feststoffpartikel für den Reduktionsreaktor; und/oder

(ii) Bereitstellen von Dampf, Kohlendioxid ($CO_2$) oder einer Kombination davon für den Reduktionsreaktor; wobei das kohlenstoffhaltige Ausgangsmaterial Kohle, Biomasse, Erdgas, Schiefergas, Biogas oder Petrolkoks ist; wobei der erste Produktgasstrom eines oder mehrere von Folgendem einschließt: nicht umgewandelten gasförmigen Brennstoff, nicht umgewandelte flüchtige Komponenten fester Ausgangsmaterialien, Wasserstoff ($H_2$), Kohlenmonoxid (CO), $CO_2$ und Dampf; wobei das Oxidationsmittel mindestens eines von Folgendem einschließt: Dampf, Kohlendioxid ($CO_2$) und Luft; und wobei der zweite Produktgasstrom eines oder mehrere von Folgendem einschließt: Wasserstoff ($H_2$), Dampf, Kohlenmonoxid (CO), Kohlendioxid ($CO_2$), Stickstoff ($N_2$) und Sauerstoff ($O_2$).

14. Verfahren nach einem der Ansprüche 12 bis 13, wobei der Reduktionsreaktor und der Verbrennungsreaktor bei einer Temperatur von 600 °C bis 1300 °C und einem Druck von 0,5 atm bis 50 atm betrieben werden.

15. Verfahren nach einem der Ansprüche 12 bis 14, ferner umfassend das Bereitstellen zweiter aktiver Feststoffpartikel, wobei die zweiten aktiven Feststoffpartikel ein Metalloxid umfassen, das sich von den aktiven Feststoffpartikeln unterscheidet.

## Revendications

1. Système de bouclage chimique (200, 300, 400) comprenant :

   un réacteur réducteur comprenant des particules solides actives et des particules solides inertes, les particules solides actives comprenant un oxyde métallique ;

   dans lequel les particules solides actives peuvent passer d'une réaction de réduction à une réaction d'oxydation ;
   dans lequel les particules solides inertes comprennent un matériau réfractaire ; et dans lequel les particules solides inertes ne sont pas des réactifs dans la réaction de réduction ou la réaction d'oxydation ; et

   un réacteur de combustion en communication fluidique avec le réacteur réducteur, le réacteur de combustion étant configuré pour recevoir des particules solides actives et des particules solides inertes du réacteur réducteur.

2. Système de bouclage chimique selon la revendication 1, dans lequel l'oxyde métallique est de l'oxyde de fer ($Fe_2O_3$), de l'oxyde de cuivre (CuO), de l'oxyde de nickel (NiO), de l'oxyde de manganèse ($Mn_2O_3$), de l'oxyde de cérium ($CeO_2$), de l'oxyde de cobalt ($Co_3O_4$), de l'oxyde de tungstène ($WO_3$), de l'oxyde de vanadium ($V2O_5$), de l'oxyde de calcium et de fer ($Ca_2Fe_2O_5$), ou des combinaisons de ceux-ci, éventuellement dans lequel l'oxyde métallique est CuO, $Mn_2O_3$, $Co_3O_4$, $Fe_2O_3$, NiO, ou $CeO_2$.

3. Système de bouclage chimique selon l'une quelconque des revendications 1 à 2, dans lequel les particules solides actives comprennent en outre un support comprenant du lithium (Li), du béryllium (Be), du bore (B), du sodium (Na), du magnésium (Mg), de l'aluminium (Al), du silicium (Si), du potassium (K), du calcium (Ca), du scandium (Sc), du titane (Ti), du vanadium (V), du chrome (Cr), du manganèse (Mn), du cobalt (Co), du zinc (Zn), du gallium (Ga), du germanium (Ge), du rubidium (Rb), de l'yttrium (Y), du zirconium (Zr), du niobium (Nb), du molybdène (Mo), du cadmium (Cd), de l'indium (In), de l'étain (Sn), de l'antimoine (Sb), du césium (Cs), du baryum (Ba), du lanthane (La), du cérium (Ce), du thorium (Th), et leurs combinaisons, éventuellement dans lequel le support est $SiO_2$, MgO, $Al_2O_3$, $TiO_2$, SiC, ou une combinaison de ceux-ci.

4. Système de bouclage chimique selon la revendication 3, dans lequel le pourcentage pondéral du matériau de support est compris entre 1 % en poids et 99 % en poids de la particule solide active.

5. Système de bouclage chimique selon l'une quelconque des revendications 1 à 4, dans lequel les particules solides actives comprennent en outre un ou plusieurs dopants choisis parmi : le nickel (Ni), le cobalt (Co), le cuivre (Cu), le scandium (Sc), le titane (Ti), le vanadium (V), le chrome (Cr), le manganèse (Mn), le zinc (Zn), l'yttrium (Y), le zirconium (Zr), le niobium (Nb), le molybdène (Mo), le technétium (Tc), le ruthénium (Ru), le rhodium (Rh), le palladium (Pd), l'argent (Ag), le cadmium (Cd), le lutécium (Lu), l'hafnium (Hf), le tantale (Ta), le tungstène (W), le rhénium (Re), l'osmium (Os), l'iridium (Ir), le platine (Pt) et l'or (Au).

6. Système de bouclage chimique selon l'une quelconque des revendications 1 à 5, dans lequel le matériau réfractaire comprend $SiO_2$, $Al_2O_3$, CaO, MgO, des aluminosilicates, du kaolin, de la mullite, de l'alumine-zircone-silice, $CaAl_2O_4$, ou $CaAl_4O_7$.

7. Système de bouclage chimique selon l'une quelconque des revendications 1 à 6, dans lequel le réacteur réducteur comprend en outre des secondes particules solides actives, les secondes particules solides actives comprenant un oxyde métallique différent de celui des particules solides actives.

8. Système de bouclage chimique selon l'une quelconque des revendications 1 à 7, dans lequel le rapport entre les particules solides inertes et les particules solides actives est compris entre 0,25:1 et 1:1.

9. Système de bouclage chimique selon l'une quelconque des revendications 1 à 8, comprenant en outre un réacteur oxydant en communication fluidique avec le réacteur de combustion et le réacteur réducteur, le réacteur oxydant étant configuré pour recevoir des particules solides actives et des particules solides inertes du réacteur de combustion.

10. Système de bouclage chimique selon l'une quelconque des revendications 1 à 9, dans lequel les particules solides actives :

(i) ont un diamètre compris entre 0,05 mm et 5 mm et dans lequel les particules solides inertes ont un diamètre compris entre 0,05 mm et 5 mm ; et/ou
(ii) ont une densité de particules actives comprise entre 1000 et 5000 $kg/m^3$ et dans lequel les particules solides inertes ont une densité de particules inertes comprise entre 1000 et 5000 $kg/m^3$, éventuellement dans lequel la densité de particules actives n'est pas supérieure de plus de 40 % ou inférieure de plus de 40 % à la densité de particules inertes.

11. Système de bouclage chimique selon l'une quelconque des revendications 1 à 10, dans lequel le réacteur réducteur est disposé comme un lit mobile à co-courant, un lit mobile à contre-courant, un lit fluidisé, un lit fixe, un lit fixe à commutation de gaz, un four rotatif ou un réacteur réducteur descendant ; et dans lequel le réacteur de combustion est disposé comme un lit mobile à co-courant, un lit mobile à contre-courant, un lit fluidisé, un lit fixe, un lit fixe à commutation de gaz, un four rotatif, un réacteur réducteur descendant ou ascendant.

12. Procédé d'exploitation d'un système de bouclage chimique (200, 300, 400), le procédé consistant à :

fournir des particules solides actives et des particules solides inertes à un réacteur réducteur,

dans lequel les particules solides actives comprennent un oxyde métallique ;
dans lequel les particules solides actives peuvent passer d'une réaction de réduction à une réaction d'oxydation ;
dans lequel les particules solides inertes comprennent un matériau réfractaire ; et
dans lequel les particules solides inertes ne sont pas des réactifs dans la réaction de réduction ou la réaction d'oxydation ;

fournir une matière première carbonée au réacteur réducteur, dans lequel la réaction de réduction inclut la matière première carbonée et les particules solides actives et génère un premier flux gazeux de produit, où l'oxygène de réseau est transféré des particules solides actives à la matière première carbonée, générant ainsi des particules solides actives réduites ; et
fournir les particules solides actives réduites, les particules solides inertes et l'agent oxydant à un réacteur de combustion, le réacteur de combustion étant en communication fluidique avec le réacteur réducteur et configuré pour recevoir les particules solides actives réduites et les particules inertes du réacteur réducteur, dans lequel la réaction d'oxydation comprend les particules solides actives réduites et l'agent oxydant pour reconstituer l'oxygène de réseau et générer un second flux de gaz de produit.

13. Procédé selon la revendication 12, comprenant en outre les étapes consistant à :

(i) fournir les particules solides actives du réacteur de combustion à un réacteur d'oxydation ; fournir un flux d'air au réacteur d'oxydation, dans lequel les particules solides actives sont régénérées dans le réacteur d'oxydation ; collecter un flux d'air appauvri du réacteur d'oxydation ; et fournir les particules solides actives régénérées au réacteur réducteur ; et/ou

(ii) fournir de la vapeur, du dioxyde de carbone ($CO_2$), ou une combinaison de ceux-ci, au réacteur réducteur ; dans lequel la matière première carbonée est du charbon, de la biomasse, du gaz naturel, du gaz de schiste, du biogaz ou du coke de pétrole ; dans lequel le premier flux de gaz de produit comprend un ou plusieurs des éléments suivants : un combustible gazeux non converti, des composants volatils non convertis de matières premières solides, de l'hydrogène ($H_2$), du monoxyde de carbone (CO), du $CO_2$ et de la vapeur ; dans lequel l'agent oxydant comprend au moins l'un des éléments suivants : de la vapeur, du dioxyde de carbone ($CO_2$), et de l'air ; et dans lequel le second flux de gaz produit comprend un ou plusieurs des éléments suivants : de l'hydrogène ($H_2$), de la vapeur, du monoxyde de carbone (CO), du dioxyde de carbone ($CO_2$), de l'azote ($N_2$), et de l'oxygène ($O_2$).

14. Procédé selon l'une quelconque des revendications 12 à 13, dans lequel le réacteur réducteur et le réacteur de combustion fonctionnent à une température de 600°C à 1300°C et à une pression de 0,5 atm à 50 atm.

15. Procédé selon l'une quelconque des revendications 12 à 14, comprenant en outre la fourniture de secondes particules solides actives, les secondes particules solides actives comprenant un oxyde métallique différent des particules solides actives.

**FIG. 1**

FIG. 2

**FIG. 3**

FIG. 4

*FIG. 5A*

*FIG. 5B*

## FIG. 6A

## FIG. 6B

**FIG. 7A**

**FIG. 7B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62976908
- US 2012319051 A1
- EP 2514516 A1